# EUROPÄISCHE PATENTSCHRIFT

(11) **EP 1 980 773 B1**
(45) Veröffentlichungstag und Bekanntmachung des Hinweises auf die Patenterteilung: **06.06.2012**
(21) Anmeldenummer: 08152558.6
(22) Anmeldetag: 11.03.2008
(51) Int. Cl.: F16J 9/22

(54) **Thermisches Spritzverfahren zum Beschichten einer Kolbenringnute, Verwendung eines Spritzdrahts, sowie ein Kolben mit einer thermischen Spritzschicht**
Thermal spraying method for coating a piston ring groove, application of a spray wire and piston with a thermal spray coating
Procédé de projection thermique destiné à recouvrir une gorge annulaire, utilisation d'un fil de projection tout comme piston doté d'un revêtement thermique

(30) Priorität: 13.04.2007 EP 07106114
(43) Veröffentlichungstag der Anmeldung: 15.10.2008
(73) Patentinhaber: Wärtsilä Schweiz AG, 8401 Winterthur (CH)
(72) Erfinder: Schlager, Dietmar, Dr., 8408 Winterthur (CH)
(74) Vertreter: Sulzer Management AG

(56) Entgegenhaltungen:
- EP-A- 1 618 323
- DE-A- 10 163 933

## Beschreibung

Die Erfindung betrifft ein thermisches Spritzverfahren zum Beschichten einer Kolbenringnute eines Kolbens eines Zweitakt-Grossdieselmotors, die Verwendung eines Spritzdrahts zur Erzeugung einer thermischen Spritzschicht nach dem erfindungsgemässen Verfahren, sowie einen Kolben für einen Zweitakt-Grossdieselmotor mit einer thermischen Spritzschicht hergestellt nach dem erfindungsgemässen Verfahren, gemäss dem Oberbegriff der unabhängigen Ansprüche 1, 13 und 17.

Die aus dem Stand der Technik bekannten Kolben für einen Grossdieselmotor sind in der Regel mit einer Packung aus mehreren, in jeweils einer Kolbenringnute übereinander angeordneten Kolbenringen ausgestattet. Typischerweise umfassen die bekannten Kolbenringpackungen mindestens zwei Kolbenringe, meist jedoch drei, vier oder sogar fünf Kolbenringe, je nach Grösse und / oder Leistung des Grossdieselmotors bzw. je nach Anforderungen bzw. den speziellen Betriebsbedingungen, unter denen die Maschine betrieben wird.

Die Kolbenringe, die verschiedene Funktionen erfüllen, wie zum Beispiel die Führung des Kolbens im Zylinder, die Verteilung und / oder Abstreifung eines Schmiermittels auf der Lauffläche des Zylinders, die Abdichtung des Brennraums gegen die Kolbenunterseite und das Kurbelgehäuse usw., sind im Betriebszustand erheblichen Belastungen ausgesetzt. So stehen die Kolbenringe unmittelbar in reibendem Kontakt mit der Zylinderlauffläche, der Verbrennungsdruck muss von den Kolbenringen aufgenommen werden und die Kolbenringe sind nicht zuletzt erheblichen thermischen, mechanischen und chemischen Belastungen ausgesetzt. Chemisch besonders aggressive Bedingungen entstehen bei der Verbrennung in Zweitakt-Grossdieselmotoren, die als Treibstoff u.a. Schweröl, Dieselkraftstoffe, Biokraftstoffe usw. bzw. in speziellen Fällen auch Naturgas verfeuern.

Neben Verschleissschutzbeschichtungen an den Kolbenringen selbst, ist es seit langem bekannt, auch die Kolbenringnuten ganz oder teilweise mit Verschleissschutzschichten zu versehen. Dabei sind es im wesentlichen die die Kolbenringnute in der Höhe begrenzenden Seitenflächen der Kolbenringnuten, die gegen Verschleiss geschützt werden müssen; weniger die umlaufenden Rückflächen der Kolbenringnuten.

Weit verbreitet sind für die Seitenflächen von Kolbenringnuten, insbesondere für Dieselmotoren, Verschleissschutzschichten aus Hartchrom, wie sie z.B. in der CH 375 951 beschrieben sind. Solche Hartchromschichten werden in der Regel galvanisch in einem Bad aufgebracht und weisen zahlreiche Nachteile auf. Die Verfahren zum Aufbringen der bekannten Hartchromschichten sind sehr aufwendig und damit teuer und zudem entsprechen insbesondere die elektrogalvanischen Verfahren nicht mehr den zunehmend strengeren Umweltstandards, wie sie heute gefordert werden. Darüber hinaus halten diese Schichten den hohen Belastungen, wie sie vor allem in Grossdieselmotoren auftreten, auf Dauer nicht Stand. Hohe Temperaturen in Verbindung mit hohen Drücken, abrasive Partikel, die zum Beispiel über den Kraftstoff oder mit der Ladeluft zugeführt werden usw. führen zu einem vorzeitigen Verschleiss der bekannten Hartchromschichten.

Zur Vermeidung dieser Probleme wird in der EP 1 618 323 vorgeschlagen, die elektrogalvanisch aufgebrachten Hartchromschichten durch thermische Spritzschichten auf den Seitenflächen der Kolbenringnuten zu ersetzen, die mittels Hochgeschwindigkeits Flammspritzen, ein Verfahren, das häufig auch als HVOF (High Velocity Oxygen Fuel) Verfahren bezeichnet wird, thermisch aufgespritzt werden.

Dadurch lassen sich zwar eine Vielzahl der Probleme vermeiden, die die elektrogalvanisch aufgebrachten Hartchromschichten mit sich bringen, es hat sich jedoch gezeigt, dass die Vorteile dieser HVOF-Schichten durch neue Nachteile erkauft werden müssen.

Ein wesentlicher Nachteil des HVOF-Verfahrens ist, dass es grundsätzlich verhältnismässig aufwendig und teuer in der Ausführung ist. So ist gemäss EP 1 618 323 nach dem Aufbringen der mittels HVOF gespritzten Schichten eine Wärmebehandlung unter Zufuhr von Schutzgas notwendig, wenn Schichten von brauchbarer Qualität erzeugt werden sollen. Durch die Wärmebehandlung wird eine Oxydation insbesondere in der Verbindungszone der HVOF-Schichten mit dem Grundmaterial verhindert, wodurch eine verbesserte Haftung der Verschleissschutzschicht gewährleistet werden soll.

Was jedoch insbesondere für die Beschichtung der relativ schmalen und tiefen Kolbenringnuten viel wesentlicher ist, ist die Tatsache, dass die zu beschichtenden Flächen, also im Fall von Kolbenringnuten die Seitenflächen, möglichst unter einem rechten Winkel beschichtet werden müssen. D.h., wenn Schichten hoher Qualität mittels eines HVOF-Verfahrens hergestellt werden sollen, muss der Beschichtungsstrahl möglichst senkrecht auf die zu beschichtende Oberfläche gerichtet werden. Je mehr der Beschichtungswinkel von der Senkrechten abweicht, umso nachteiliger wirkt sich das auf die Porosität, die Härte und vor allem auch auf die Haftfestigkeiten der mittels HVOF erzeugten Schichten aus.

Diese Tatsache ist im Grunde genommen sehr plausibel, weil beim HVOF-Verfahren ein wesentlicher Teil der Schmelzenergie zum Auf- bzw. Anschmelzen der aufzuspritzenden Teilchen durch Umwandlung der kinetischen Energie der Teilchen in Wärmeenergie durch die Wucht des Aufpralls der Teilchen auf der zu beschichtenden Oberfläche erzeugt wird. Wenn der Spritzwinkel nun wesentlich von einem senkrechten Einfall der Teilchen auf die Oberfläche der zu beschichtenden Fläche abweicht, wird mit immer flacherem Einfallswinkel die Effizienz der Energieumwandlung von kinetischer Energie in Wärmeenergie zunehmend schlechter, was sich entsprechend negativ auf die Schichtqualität auswirkt.

Da allein schon aus rein geometrischen Gründen bei einer relativ schmalen und tiefen Kolbenringnute der Beschichtungsstrahl grundsätzlich nicht einmal annähernd senkrecht auf die zu beschichtenden Seitenflächen gerichtet werden kann, müssen bei dem in der EP 1 618 323 offenbarten HVOF-Verfahren unausweichlich Kompromisse bezüglich der Qualität der auf die Seitenflächen der Kolbenringnuten aufgespritzten Verschleissschutzschichten eingegangen werden.

D.h., da aus rein geometrischen Gründen die Seitenflächen in den engen Kolbenringnuten immer unter einem Winkel gespritzt werden müssen, der wesentlich von einem rechten Winkel abweicht, und typischerweise z.B. bei einem Winkel von ca. 45° liegt, ist es bei Verwendung eines HVOF-Verfahrens grundsätzlich nicht möglich, Schichten von hoher Qualität und befriedigender Lebensdauer herzustellen, die den enormen Belastungen durch Druck, Temperatur, chemische Angriffe, abrasive Teilchen usw., wie sie beim Betrieb eines Zweitakt-Grossdieselmotors unvermeidlich auftreten, auf Dauer standzuhalten.

Darüber hinaus wird die Qualität der mittels HVOF auf die Seitenflächen der Kolbenringnuten aufgebrachten Schichten noch dadurch verschlechtert, dass die Seitenfläche über ihre gesamte Tiefe, also von der äusseren Kolbenmantelfläche bis zur umlaufenden Rückfläche der Kolbenringnute in der Regel nicht unter einem konstanten Spritzwinkel gespritzt werden können. Tief im Inneren der Nut trifft die Mehrheit des gespritzten Materials unter einem flacheren Winkel auf den Seitenflächen auf, als am äusseren Rand in der Nähe der äusseren Kolbenmantelfläche. Das hat zur Folge, dass sich die Schichtqualität in Richtung zur Kolbenmitte hin, bzw. in umgekehrter Richtung verändert. Das führt zu inneren Spannungen in der Schicht und zu ungleichmässiger Abnutzung der Verschleissschutzschichten, wodurch die Führung des Kolbenrings in der Kolbenringnute schon nach kurzer Betriebsdauer in nicht akzeptabeler Weise verschlechtert wird, so dass bereits frühzeitig aufwendige Instandsetzungs- und Reparaturmassnahmen notwendig werden, was unwirtschaftlich ist und letztlich, wenn die vorzeitige Abnützung nicht rechtzeitig erkannt wird, sogar zu sicherheitsrelevanten Problemen bzw. massiven Folgeschäden an der Maschine führen kann.

Ausgehend vom Stand der Technik ist es daher die Aufgabe der Erfindung, ein verbessertes thermisches Spritzverfahren zur Beschichtung von Kolbenringnuten, sowie einen entsprechend verbesserten Kolben vorzuschlagen, mit dem die zuvor beschriebenen Nachteile des Stands der Technik vermieden werden, und damit ein wirtschaftlicherer Betrieb eines Zweitakt-Grossdieselmotors, längere Wartungsintervalle und letztlich eine höhere Lebensdauer der betroffenen Komponenten und des Grossdieselmotors gewährleistet ist.

Die diese Aufgaben lösenden Gegenstände der Erfindung sind durch die Merkmale der unabhängigen Ansprüche 1, 13 und 17 gekennzeichnet.

Die abhängigen Ansprüche beziehen sich auf besonders vorteilhafte Ausführungsformen der Erfindung.

Die Erfindung betrifft somit ein thermisches Spritzverfahren zum Beschichten einer Kolbenringnute eines Kolbens eines Zweitakt-Grossdieselmotors, wobei zur Aufnahme und Führung eines Kolbenrings in der Kolbenringnute, die Kolbenringnute durch eine erste brennraumnahe Seitenfläche, eine zweite brennraumferne Seitenfläche und eine im Kolbenmantel umlaufende Rückfläche begrenzt ist, dadurch gekennzeichnet, dass mindestens die erste Seitenfläche und / oder die zweite Seitenfläche der Kolbenringnute mittels eines thermischen Drahtspritzverfahrens mit einer thermischen Spritzschicht versehen wird.

Wesentlich für die Erfindung ist die Erkenntnis, dass die Qualität der durch ein Drahtspritzverfahren gespritzten Schichten bei einer Variation des Spritzwinkels, unter dem die Schichten auf ein Substrat aufgebracht werden, über weite Winkelbereiche sehr unempfindlich reagiert.

Insbesondere hat sich gezeigt, dass Qualitätsmerkmale der gespritzten Schichten, wie z.B. die Härte, die Porosität, die Haftfestigkeit einer mit einem Drahtspritzverfahren beschichteten Seitenfläche einer Kolbenringnute auch bei einem Spritzwinkel der deutlich von 0° von einer Flächennormalen der betreffenden Seitenfläche, d.h. auch bei einem Spritzwinkel der deutlich von der Senkrechten abweicht, sich im wesentlichen nicht verschlechtern.

Dabei ist unter dem Spritzwinkel im Rahmen dieser Anmeldung derjenige Winkel zu verstehen, den eine Zerstäubungsachse des von der Drahtspritzpistole ausgehenden Strahls aus Spritzmaterial mit einer Flächennormalen der zu beschichtenden Schicht bildet.

Es können daher mit dem erfindungsgemässen Verfahren erstmals problemlos thermische Spritzschichten auch auf verhältnismässig breite Seitenflächen von Kolbenringnuten aufgebracht werden, die trotz eines Spritzwinkels, der deutlich grösser als 0° ist, von hervorragender Qualität sind, was z.B. die Anforderungen an die Härte, die Porosität, Haftfestigkeit und die Gleichmässigkeit der Schichten über die gesamte Oberfläche der Seitenflächen betrifft.

So können erstklassige Schichten z.B. unter einem Spritzwinkel von 70° in Bezug auf die Normale der Seitenfläche problemlos gespritzt werden, wobei solche Schichten bezüglich ihrer Qualität praktisch identisch zu Schichten sind, die in Versuchen mit dem gleichen Drahtspritzverfahren unter senkrechtem Einfall, also bei einem Spritzwinkel von 0° gespritzt wurden.

Dadurch kann beim Spritzen nicht nur die schwierige Geometrie der zu beschichtenden Seitenflächen problemlos berücksichtigt werden, auch werden die gespritzten Schichten viel gleichmässiger als die aus dem Stand der Technik bekannten HVOF-Schichten. Das liegt daran, dass unterschiedliche Auftreffwinkel des gespritzten Materials, z.B. tief in der Nut nahe der umlaufenden Rückwand, wo eher grosse Spritzwinkel auftreten, und am Rand, in der Nähe der äusseren Kolbenoberfläche, wo eher kleinere Spritzwinkel zu erwarten sind, praktisch keinen Einfluss auf die Eigenschaften der gespritzten Schichten haben.

So konnten bei einem ersten Spritzwinkel von ca. 0° und bei einem zweiten Spritzwinkel von 40° bei Verwendung eines erfindungsgemässen Verfahrens thermische Spritzschichten von praktische gleicher Haftfestigkeit hergestellt werden. Es wurden dabei Haftfestigkeiten von über 5000 psi, verschiedentlich von über 6000 psi und sogar Werte der Haftfestigkeit von mehr als 7500 psi gemessen (psi = pounds per square inch).

Desweiteren hat sich gezeigt, dass die erfindungsgemäss mit einem Drahtspritzverfahren gespritzten Schichten auch nicht mehr einer aufwendigen Wärmebehandlung unterzogen werden müssen. Auch ohne Wärmebehandlung zeigen die Schichten eine ausgezeichnete Oxydationsfestigkeit in der Verbindungszone, wobei gleichzeitig problemlos Härten von 900 Vickers und mehr, insbesondere bei der Verwendung von Nano-Stahl erreichbar sind.

Dabei sind die Drahtspritzverfahren grundsätzlich kostengünstiger als die apparativ aufwendigen HVOF-Verfahren, sind leichter zu handhaben, auch von nicht hoch qualifiziertem Personal, und es steht auf dem Markt eine viel grössere Auswahl an Spritzmaterialien in Form von Spritzdrähten zur Verfügung, die billig und leicht verfügbar sind.

Die erfindungsgemässe thermische Spritzschicht ist dabei in der Praxis eine Verschleissschutzschicht ist. In speziellen Fällen kann es sich aber auch um eine Schmutz abweisende oder eine andere Schicht handeln, wobei in speziellen Fällen auch Multifunktionsschichten möglich sind, die mehrere Funktionen gleichzeitig erfüllen.

Als Drahtspritzverfahren kommt konkret insbesondere ein Flammdrahtspritzverfahren, ein Plasmadrahtspritzverfahren, bzw. ein Lichtbogendrahtspritzverfahren in Frage, die alle an sich wohlbekannt sind, und z.B. in "Thermisches Spritzen" von K. Smolka, Deutscher Verlag für Schweisstechnik GmbH, ausführlich beschrieben sind. Dabei hat sich gezeigt, dass zur Beschichtung von Kolbenringnuten das Lichtbogendrahtspritzverfahren besonders gut geeignet ist.

Als Spritzdraht kommen im Prinzip alle geeigneten Spritzdrähte in Frage, die insbesondere ebenfalls in der zuvor zitierten Monographie von Smolka beschrieben sind, wobei sich für die Praxis als sehr vorteilhaft die Verwendung von, dem Fachmann wohlbekannten, Fülldrähten erwiesen hat, insbesondere solche Fülldrähte, die Nanopartikel und / oder eine amorphe Phase und / oder eine Hartphase umfassen. Dadurch lassen sich Schichten mit wohlbestimmten Eigenschaften herstellen, also Schichten die z.B. eine Härte von 750 HV und mehr aufweisen, dabei gleichzeitig eine genügend hohe Duktilität aufweisen, sehr gut haften und im Ausdehnungskoeffizient ähnlich dem Grundmaterial des Kolbens sind, so dass auch bei grossen Temperaturbelastungen, wie grossen Temperaturdifferenzen oder grossen Temperatursprüngen praktisch keine Spannungen in der erfindungsgemäss gespritzten Schicht bzw. zwischen Schicht und Substrat auftreten.

Ein besonders geeigneter Spritzdraht besteht dabei bevorzugt aus den Elementen C, Cr, Mn, Mo, B, W, Nb, Si und Fe, wobei der Spritzdraht im Speziellen die folgende Zusammensetzung haben kann:
C = 2 bis 6 Gewichts-%
Cr = 10 bis 30 Gewichts-%
Mn = 2.5 bis 7.5 Gewichts-%
Mo = 5 bis 15 Gewichts-%
B = 2.5 bis 7.5 Gewichts-%
W = 4.5 bis 13.5 Gewichts-%
Nb = 4.5 bis 13.5 Gewichst-%
Si = 1 bis 3 Gewichts-%
Fe = Differenz auf 100 Gewichts-%.

Ein für die Beschichtung von Kolbenringnuten besonders gut geeigneter Spritzdraht, mit welchem in Versuchen beste Ergebnisse bzgl. Haftfestigkeit, Verschleissfestigkeit, Lebensdauer der Schicht, sowie Härten von 750HV bis weit über 900HV erzielt werden konnten hatte die die folgende Zusammensetzung:
C = 2 bis 4 Gewichts-%
Cr = 10 bis 20 Gewichts-%
Mn = 2.5 bis 5 Gewichts-%
Mo = 5 bis 10 Gewichts-%
B = 2.5 bis 5 Gewichts-%
W = 4.5 bis 9 Gewichts-%
Nb = 4.5 bis 9 Gewichst-%
Si = 1 bis 2 Gewichts-%
Fe = Differenz auf 100 Gewichts-%

Dabei können durch geeignete Wahl der exakten Zusammensetzung des Spritzdrahtes die interessierenden Eigenschaften wie Härte, Duktilität, Haftfestigkeit, Porosität usw. je nach Anforderung entsprechend optimiert bzw. angepasst werden.

Wie bereits oben ausführlich dargelegt, kann durch Anwendung des erfindungsgemässen Verfahrens die thermische Spritzschicht schräg in Bezug auf eine Flächennormale der ersten Seitenfläche und / oder der zweiten Seitenfläche der Kolbenringnute, insbesondere unter einem Winkel zwischen 0° und 80°, im Speziellen unter einem Winkel zwischen 30° und 70°, insbesondere unter einem Winkel zwischen 50° und 60° in Bezug auf die Flächennormale der ersten Seitenfläche und / oder der zweiten Seitenfläche der Kolbenringnute thermisch gespritzt werden.

Dabei kann in speziellen Fällen natürlich auch die umlaufende Rückfläche der Kolbenringnute beschichtet werden, oder bestimmte Bereiche des Kolbens mit einer Blende abgedeckt werden.

Da sich jedoch gezeigt hat, das sich bei Verwendung der aus dem Stand der Technik bekannten Blenden oft eine Reihe von Problemen in der Praxis ergeben können, insbesondere, aber nicht nur, in der Nähe der Ränder der Blenden haften die Schichten schlecht oder neigen zum Abplatzen, wird bevorzugt eine Oberfläche des Kolbens vollständig mit der thermischen Spritzschicht beschichtet und nachfolgend wird die thermische Spritzschicht von einem nicht zu beschichtenden Oberflächenbereich wieder entfernt.

So kann z.B. die umlaufende Rückfläche der Kolbenringnute und / oder ein Teil der äusseren Oberfläche des Kolbens beim Beschichtungsvorgang einfach mitbeschichtet werden. Anschliessend wird dann z.B. die umlaufende Nut und die äussere Oberfläche wieder von der Schutzschicht befreit, indem die Schutzschicht zum Beispiel durch Schleifen, Polieren, Honen, Span abtragende Methoden oder durch jede geeignete andere Methode wieder entfernt wird. Dadurch werden die oben beschriebenen negativen Effekte auf die thermischen Spritzschichten, insbesondere in den Randbereichen der Schichten vermieden.

In ganz speziellen Fällen oder selektiv für bestimmte Oberflächenbereiche des Kolbens kann während eines Beschichtungsvorgangs ein nicht zu beschichtender Oberflächenbereich natürlich auch durch eine Maske abgeschirmt werden, wenn z.B. auf Grund der speziellen Geometrie keine Nachteile durch die Maskierung zu erwarten sind.

Eine erfindungsgemässe thermische Spritzschicht kann dabei eine sehr hohe Härte von z.B. grösser als 600 HV, im Speziellen eine Härte grösser als 750 HV haben, selbst Schichten mit Härten grösser als 900 HV können durch Verwendung des erfindungsgemässen Verfahrens problemlos hergestellt werden.

Typische Schichtdicken einer thermischen Spritzschicht liegen zwischen 0.1 mm und 1 mm, insbesondere zwischen 0.3 mm und 0.6 mm.

Im weiteren betrifft die Erfindung die Verwendung eines Spritzdrahtes bestehend aus den Elementen C, Cr, Mn, Mo, B, W, Nb, Si und Fe zur Erzeugung einer thermischen Spritzschicht, zumindest auf den Seitenflächen einer Kolbenringnute, mittels eines oben ausführlich dargestellten erfindungsgemässen Verfahrens.

Der verwendete Spritzdraht hat dabei bevorzugt die oben bereits im Detail angegebene spezielle chemische Zusammensetzung und kann, wie ebenfalls bereits erwähnt, ein Fülldraht, insbesondere ein mit Nanopartikeln und / oder ein mit amorphen Phasen und / oder ein mit Hartphasen gefüllter Fülldraht sein.

Des weiteren betrifft die Erfindung einen Kolben für einen Zweitakt-Grossdieselmotor mit einer thermischen Spritzschicht hergestellt mit einem oben beschriebenen erfindungsgemässen Verfahren.

Im folgenden wird die Erfindung an Hand der Zeichnung näher erläutert. Es zeigen in schematischer Darstellung:
- Fig. 1: einen Kolben mit einer erfindungsgemässen thermischen Spritzschicht im Einbauzustand;
- Fig. 2: einen erfindungsgemässen Beschichtungsvorgang einer Seitenfläche einer Kolbenringnute.

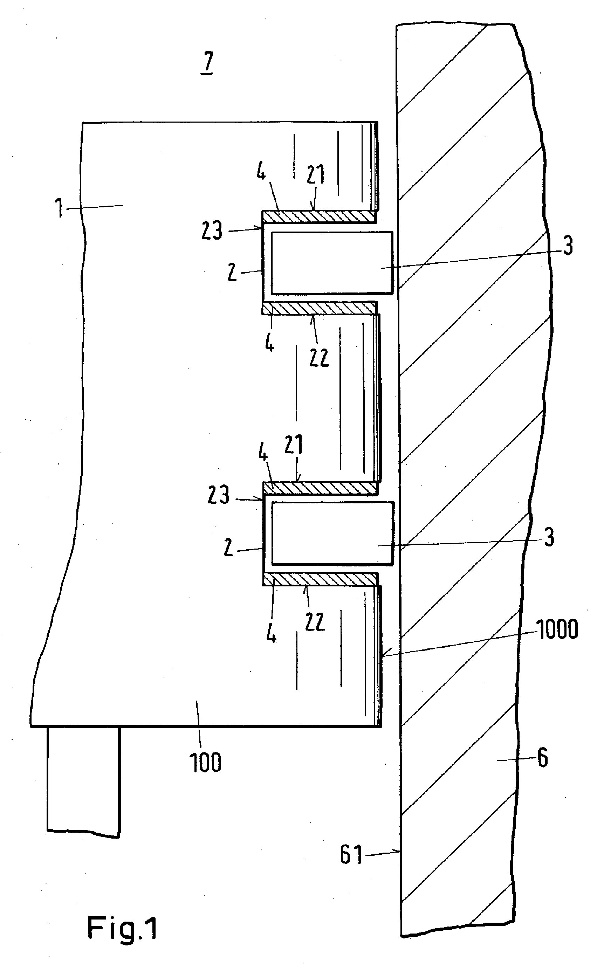

In Fig. 1 ist teilweise im Schnitt ein Kolben eines Zweitakt-Grossdieselmotors im Einbauzustand mit einer erfindungsgemässen thermischen Spritzschicht schematisch dargestellt.

Der Kolben 1 ist in an sich bekannter Weise in einem Zylinderliner 6 angeordnet, wobei der Kolben 1 entlang der Zylinderlauffläche 61 hin und her bewegbar angeordnet ist. Die Kolberinge 3, die in den Kolbenringnuten 2 angeordnet sind, stehen im Betriebszustand des Zweitakt-Grossdieselmotors in direktem reibendem Kontakt mit der Zylinderlauffläche 61.

Bei dem in Fig. 1 gezeigten Ausführungsbeispiel umfasst die Kolbenringpackung lediglich zwei Kolbenringe 3 in zwei Kolbenringnuten 2, bei welchen jeweils eine erste brennraumnahe Seitenfläche 21 und eine zweite brennraumferne Seitenfläche beschichtet sind, während eine im Kolbenmantel 100 umlaufende Rückfläche 23, die die Kolbenringnute 2 in Richtung zu einer nicht gezeigten Mittelachse des Kolbens 1 begrenzt, nicht beschichtet ist.

Es versteht sich, dass in einem anderen Ausführungsbeispiel der Kolben 1 auch mehr oder weniger als zwei Kolbenringe 3 bzw. Kolbenringnuten 2 aufweisen kann und dass insbesondere auch die umlaufende Rückfläche 23 mit einer erfindungsgemässen thermischen Spritzschicht 4 versehen sein kann, bzw. eine bestimmte eine Kolbenringnute 2, die zum Beispiel einen Kolbenring 3 führt, der nicht sehr hohen Belastungen ausgesetzt ist, gar nicht beschichtet sein kann. In einem anderen Beispiel kann z.B. aus Effizienzgründen nur die erste Seitenfläche 21, die dem Brennraum 7 zugewandt ist, mit einer erfindungsgemässen thermischen Spritzschicht versehen sein, während die zweite Seitenfläche 22, die dem Brennraum 7 abgewandt ist, nicht beschichtet ist oder umgekehrt.

Gemäss der vorliegenden Erfindung sind jedoch im Beispiel der Fig. 1 sowohl die erste Seitenfläche 21 als auch die zweite Seitenfläche 22 beider Kolbenringnuten 2 mittels eines thermischen Drahtspritzverfahrens mit einer thermischen Spritzschicht 4 versehen.

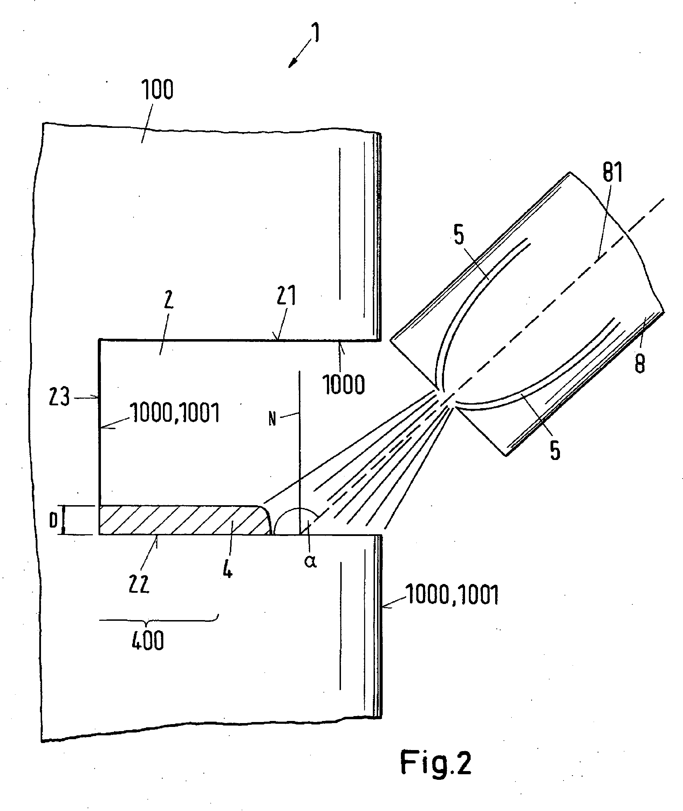

In Fig. 2 ist schematisch ein erfindungsgemässer Beschichtungsvorgang einer Seitenfläche 22 einer Kolbenringnute 2 dargestellt. Die Seitenfläche 21 ist noch nicht beschichtet und wird erst in einem nachfolgenden zweiten Arbeitsschritt mit einer erfindungsgemässen thermischen Spritzschicht 4 beschichtet werden.

Die Spritzpistole 8 ist eine an sich bekannte Lichtbogen Drahtspritzpistole 8, bei welcher zwischen den beiden Fülldrähten 5 ein Lichtbogengezündet wird, der die Spritzdrähte 5 aufschmilzt. Das aufgeschmolzene Material wird dabei mittels eines Zerstäubungsgases in Richtung der Zerstäubungsachse 81 auf die zu beschichtende Oberfläche 22 geschleudert.

Der Winkel α, der hier auch als Spritzwinkel α bezeichnet wird, ist beim Beschichten der Seitenfläche 22 als Winkel α zwischen der Flächennormalen N der Seitenfläche 22 und der Zerstäubungsachse 81 definiert. Im vorliegenden Fall beträgt der Spritzwinkel α ca. 45°, wobei der Spritzwinkel α beim vorgängigen Spritzen des bereits gespritzten Schichtbereichs 400 der Spritzschicht 4, also in dem der umlaufenden Rückfläche 23 näher gelegenen Bereich 400, grösser war. Das heisst, während des Spritzvorgangs wurde der Spritzwinkel α entsprechend der Geometrie der Kolbenringnute 2 angepasst, was, wie oben eingehend erläutert, bei Verwendung des erfindungsgemässen Verfahrens keinerlei negative Auswirkung auf die Qualität der thermischen Spritzschicht 4 hat.

Die Spritzschicht 4 der Fig. 2 hat dabei die Dicke D, also ist z.B. 0.5mm dick und weist eine Härte von über 900HV auf.

Es versteht sich von selbst, dass die in dieser Anmeldung beschriebenen erfindungsgemässen Beispiele exemplarisch zu verstehen sind, und insbesondere auch alle geeigneten Kombinationen der dargestellten Ausführungsbeispiele von der Erfindung umfasst sind.

## Patentansprüche

1. Thermisches Spritzverfahren zum Beschichten einer Kolbenringnute (2) eines Kolbens (1) eines Zweitakt-Grossdieselmotors, wobei zur Aufnahme und Führung eines Kolbenrings (3) in der Kolbenringnute (2), die Kolbenringnute (2) durch eine erste brennraumnahe Seitenfläche (21), eine zweite brennraumferne Seitenfläche (22) und eine im Kolbenmantel (100) umlaufende Rückfläche (23) begrenzt ist, **dadurch gekennzeichnet, dass** mindestens die erste Seitenfläche (21) und / oder die zweite Seitenfläche (22) der Kolbenringnute (2) mittels eines thermischen Drahtspritzverfahrens mit einer thermischen Spritzschicht (4) versehen wird.

2. Verfahren nach Anspruch 1, wobei die thermische Spritzschicht (4) eine Verschleissschutzschicht (4) ist.

3. Verfahren nach einem der Ansprüche 1 oder 2, wobei das Drahtspritzverfahren ein Flammdrahtspritzverfahren, ein Plasmadrahtspritzverfahren, insbesondere ein Lichtbogendrahtspritzverfahren ist.

4. Verfahren nach einem der vorangehenden Ansprüche, wobei als Spritzdraht (5) ein Fülldraht (5) verwendet wird, insbesondere ein mit Nanopartikeln und / oder ein mit amorphen Phasen und / oder ein mit Hartphasen gefüllter Fülldraht (5) verwendet wird.

5. Verfahren nach einem der vorangehenden Ansprüche, wobei der Spritzdraht (5) aus den Elementen C, Cr, Mn, Mo, B, W, Nb, Si und Fe besteht.

6. Verfahren nach einem der vorangehenden Ansprüche, wobei der Spritzdraht (5) die folgende Zusammensetzung hat:
C = 2 bis 6 Gewichts-%
Cr = 10 bis 30 Gewichts-%
Mn = 2.5 bis 7.5 Gewichts-%
Mo = 5 bis 15 Gewichts-%
B = 2.5 bis 7.5 Gewichts-%
W = 4.5 bis 13.5 Gewichts-%
Nb = 4.5 bis 13.5 Gewichst-%
Si = 1 bis 3 Gewichts-%
Fe = Differenz auf 100 Gewichts-%

7. Verfahren nach einem der vorangehenden Ansprüche, wobei der Spritzdraht (5) die folgende Zusammensetzung hat:
C = 2 bis 4 Gewichts-%
Cr = 10 bis 20 Gewichts-%
Mn = 2.5 bis 5 Gewichts-%
Mo = 5 bis 10 Gewichts-%
B = 2.5 bis 5 Gewichts-%
W = 4.5 bis 9 Gewichts-%
Nb = 4.5 bis 9 Gewichst-%
Si = 1 bis 2 Gewichts-%
Fe = Differenz auf 100 Gewichts-%

8. Verfahren nach einem der vorangehenden Ansprüche, wobei die thermische Spritzschicht schräg in Bezug auf eine Flächennormale (N) der ersten Seitenfläche (21) und / oder der zweiten Seitenfläche (22) der Kolbenringnut (2), insbesondere unter einem Spritzwinkel (α) zwischen 0° und 80°, im Speziellen unter einem Spritzwinkel (α) zwischen 30° und 70°, insbesondere unter einem Spritzwinkel (α) zwischen 50° und 60° in Bezug auf die Flächennormale (N) der ersten Seitenfläche (21) und / oder der zweiten Seitenfläche (22) der Kolbenringnut (N) thermisch gespritzt wird.

9. Verfahren nach einem der vorangehenden Ansprüche, wobei eine Oberfläche (1000) des Kolbens (1) vollständig mit der thermischen Spritzschicht (4) beschichtet wird und nachfolgend die thermische Spritzschicht von einem nicht zu beschichtenden Oberflächenbereich (1001) wieder entfernt wird.

10. Verfahren nach einem der vorangehenden Ansprüche, wobei während eines Beschichtungsvorgangs ein nicht zu beschichtender Oberflächenbereich (1001) durch eine Maske abgeschirmt wird.

11. Verfahren nach einem der vorangehenden Ansprüche, wobei eine thermische Spritzschicht (4) mit einer Härte grösser als 600 HV, im Speziellen mit einer Härte grösser als 750 HV, insbesondere grösser als 900 HV gespritzt wird.

12. Verfahren nach einem der vorangehenden Ansprüche, wobei die thermische Spritzschicht (4) eine Haftfestigkeit von mehr als 5000 psi, im Speziellen von mehr als 6000 psi, insbesondere von mehr als 7500 psi aufweist.

13. Verfahren nach einem der vorangehenden Ansprüche, wobei die thermische Spritzschicht (4) in einer Dicke (D) zwischen 0.1 mm und 1 mm, insbesondere mit einer Dicke zwischen 0.3 mm und 0.6 mm gespritzt wird.

14. Verwendung eines Spritzdrahtes (5) bestehend aus den Elementen C, Cr, Mn, Mo, B, W, Nb, Si und Fe zur Erzeugung einer thermischen Spritzschicht (4) nach einem der Ansprüche 1 bis 13.

15. Verwendung nach Anspruch 14, wobei der Spritzdraht (5) die folgende Zusammensetzung hat:
C = 2 bis 6 Gewichts-%
Cr = 10 bis 30 Gewichts-%
Mn = 2.5 bis 7.5 Gewichts-%
Mo = 5 bis 15 Gewichts-%
B = 2.5 bis 7.5 Gewichts-%
W = 4.5 bis 13.5 Gewichts-%
Nb = 4.5 bis 13.5 Gewichst-%
Si = 1 bis 3 Gewichts-%
Fe = Differenz auf 100 Gewichts-%

16. Verwendung nach einem der Ansprüche 14 oder 15, wobei der Spritzdraht (5) die folgende Zusammensetzung hat:
C = 2 bis 4 Gewichts-%
Cr = 10 bis 20 Gewichts-%
Mn = 2.5 bis 5 Gewichts-%
Mo = 5 bis 10 Gewichts-%
B = 2.5 bis 5 Gewichts-%
W = 4.5 bis 9 Gewichts-%
Nb = 4.5 bis 9 Gewichst-%
Si = 1 bis 2 Gewichts-%
Fe = Differenz auf 100 Gewichts-%

17. Verwendung nach einem der Ansprüche 14 bis 16, wobei der Spritzdraht (5) ein Fülldraht (5) ist, insbesondere ein mit Nanopartikeln und / oder ein mit amorphen Phasen und / oder ein mit Hartphasen gefüllter Fülldraht ist.

18. Kolben für einen Zweitakt-Grossdieselmotor mit einer thermischen Spritzschicht (4) hergestellt mit einem Verfahren nach einem der Ansprüche 1 bis 13.

## Claims

1. A thermal spray method for coating a piston ring groove (2) of a piston (1) of a two-stroke large diesel engine wherein, to receive and guide a piston ring (3) in the piston ring groove (2), the piston ring groove (2) is bounded by a first side surface (21) near the combustion space, by a second side surface (22) remote from the combustion space and by a peripherally extending rear surface (23) in the piston jacket (100), **characterised in that** at least the first side surface (21) and/or the second side surface (22) of the piston ring groove (2) is provided with a thermal spray layer (4) by means of a thermal wire spraying process.

2. A method in accordance with claim 1, wherein the thermal spray layer (4) is a wear protection layer (4).

3. A method in accordance with one of the claims 1 or 2, wherein the wire spraying method is a flame wire spraying process , a plasma wire spraying process, in particular an arc wire spraying process.

4. A method in accordance with any one of the previous claims wherein a filler wire is used as the spraying wire (5), in particular one with nanoparticles and/or one with amorphous phases and/or one with filler wire (5) filled with hard phases.

5. A method in accordance with any one of the previous claims, wherein the spraying wire (5) is made up of the elements C, Cr, Mn, Mo, B,W, Nb, Si and Fe.

6. A method in accordance with any one of the previous claims, wherein the spraying wire (5) has the following composition:
C = 2 to 6 % by weight
Cr = 10 to 30 % by weight
Mn = 2.5 to 7.5% by weight
Mo = 5 to 15 % by weight
B = 2.5 to 7.5 % by weight
W = 4.5 to 13.5 % by weight
Nb = 4.5 to 13.5 % by weight
Si = 1 to 3 % by weight
Fe = the difference to 100 % by weight.

7. A method in accordance with any one of the previous claims, wherein the spray wire (5) has the following composition:
C = 2 to 4 % by weight
Cr = 10 to 20 % by weight
Mn = 2.5 to 5 % by weight
Mo = 5 to 10 % by weight
B = 2.5 to 5 % by weight
W = 4.5 to 9 % by weight
Nb = 4.5 to 9 % by weight
Si = 1 to 2 % by weight
Fe = the difference to 100 % by weight.

8. A method in accordance with any one of the previous claims, wherein the thermal spray layer is thermally sprayed obliquely relative to a surface normal (N) of the first side surface (21) and/or of the second side surface (22) of the piston ring groove (2), in particular at a spraying angle (α) between 0° and 80°, especially at a spraying angle (α) between 30° and 70°, in particular at a spraying angle (α) between 50° and 60° relative to the surface normal (N) of the first side surface (21) and/or of the second side surface (22) of the piston ring groove (2).

9. A method in accordance with any one of the previous claims wherein a surface (1000) of the piston (1) is completely coated with the thermal spray layer (4) and subsequently the thermal spray layer is removed again from a not to be coated surface region (1001).

10. A method in accordance with any one of the previous claims wherein during a coating process a not to be coated surface region (1001) is insulated by a mask.

11. A method in accordance with any one of the previous claims wherein a thermal spray layer (4) is sprayed with a hardness greater than 600 HV, especially with a hardness greater than 750 HV, in particular greater than 900 HV.

12. A method in accordance with any one of the previous claims wherein the thermal spray layer (4) has an adhesive strength of more than 5000 psi, especially more than 6000 psi, in particular more than 7500 psi.

13. A method in accordance with any one of the previous claims wherein the thermal spray layer (4) is sprayed in a thickness (D) between 0.1 mm and 1 mm, in particular with a thickness between 0.3 mm and 0.6 mm.

14. The use of a spraying wire (5) comprising the elements C, Cr, Mn, Mo, B, W, Nb, Si and Fe for the production of a thermal spray layer (4) in accordance with one of the claims 1 to 13.

15. The use in accordance with claim 14, wherein the spraying wire (5) has the following composition:
C = 2 to 6 % by weight
Cr = 10 to 30 % by weight
Mn = 2.5 to 7.5% by weight
Mo = 5 to 15 % by weight
B = 2.5 to 7.5 % by weight
W = 4.5 to 13.5 % by weight
Nb = 4.5 to 13.5 % by weight
Si = 1 to 3 % by weight
Fe = the difference to 100 % by weight.

16. The use in accordance with one of the claims 14 or 15, wherein the spraying wire (5) has the following composition:
C = 2 to 4 % by weight
Cr = 10 to 20 % by weight
Mn = 2.5 to 5 % by weight
Mo = 5 to 10 % by weight
B = 2.5 to 5 % by weight
W = 4.5 to 9 % by weight
Nb = 4.5 to 9 % by weight
Si = 1 to 2 % by weight
Fe = the difference to 100 % by weight.

17. The use in accordance with any one of the claims 14 to 16, wherein the spraying wire is a filler wire (5), in particular a filler wire filled with nanoparticles and/or one with amorphous phases and/or one filled with hard phases.

18. A piston for a two-stroke large diesel engine with a thermal spray layer (4) manufactured using a method in accordance with any one of the claims 1 to 13.

## Revendications

1. Procédé de projection thermique pour le revêtement d'une rainure annulaire (2) d'un piston (1) d'un grand moteur Diesel à deux temps, où pour la réception et le guidage d'un segment de piston (3) dans la rainure annulaire de piston (2), la rainure annulaire de piston (2) est délimitée par une première face latérale (21) proche de l'enceinte de combustion, une deuxième face latérale (22) éloignée de l'espace de combustion et une face arrière (23) s'étendant tout autour dans l'enveloppe de piston (100), **caractérisé en ce qu'**au moins la première face latérale (21) et/ou la deuxième face latérale (22) de la rainure annulaire de piston (2) est pourvue au moyen d'un procédé de projection à fil thermique d'une couche de projection thermique (4).

2. Procédé selon la revendication 1, où la couche de projection thermique (4) est une couche de protection contre l'usure (4).

3. Procédé selon l'une des revendications 1 ou 2, où le procédé de projection à fil est un procédé de projection de métaux fondus, un procédé de projection à fil au plasma, en particulier un procédé de projection au fil à l'arc.

4. Procédé selon l'une des revendications précédentes, où est utilisé comme fil de projection (5) un fil de remplissage (5), en particulier un fil de remplissage (5) rempli de nanoparticules et/ou de phases amorphes et/ou de phases dures.

5. Procédé selon l'une des revendications précédentes, où le fil de projection (5) est constitué des éléments C, Cr, Mn, Mo, B, W, Nb, Si et Fe.

6. Procédé selon l'une des revendications précédentes, où le fil de projection (5) présente la composition suivante:
C = 2 à 6% en poids
Cr = 10 à 30% en poids
Mn = 2,5 à 7,5% en poids
Mo = 5 à 15% en poids
B = 2,5 à 7,5% en poids
W = 4,5 à 13,5% en poids
Nb = 4,5 à 13,5% en poids
Si = 1 à 3% en poids
Fe = Différence à 100% en poids.

7. Procédé selon l'une des revendications précédentes, où le fil de projection (5) présente la composition suivante:
C = 2 à 4% en poids
Cr = 10 à 20% en poids
Mn = 2,5 à 5% en poids
Mo = 5 à 10% en poids
B = 2,5 à 5% en poids
W = 4,5 à 9% en poids
Nb = 4,5 à 9% en poids
Si = 1 à 2% en poids
Fe = Différence à 100% en poids.

8. Procédé selon l'une des revendications précédentes, où la couche de projection thermique est projetée thermiquement en biais relativement à une normale de face (N) de la première face latérale (21) et/ou de la deuxième face latérale (22) de la rainure annulaire (2) du piston, en particulier sous un angle de projection (α) entre 0° et 80°, particulièrement sous un angle de projection (α) entre 30° et 70°, en particulier sous un angle de projection (α) entre 50° et 60° relativement à la normale de face (N) de la première paroi latérale (21) et/ou de la deuxième face latérale (22) de la rainure annulaire (N) du piston.

9. Procédé selon l'une des revendications précédentes, où une surface (1000) du piston est revêtue entièrement par la couche de projection thermique (4), et ensuite la couche de projection thermique est à nouveau retirée d'une zone de surface (1001) qui n'est pas à recouvrir.

10. Procédé selon l'une des revendications précédentes, où pendant une opération de revêtement, une zone de surface (1001) qui n'est pas à revêtir, est protégée par un masque.

11. Procédé selon l'une des revendications précédentes, où une couche de projection thermique (4) d'une dureté supérieure à 600 HV, en particulier d'une dureté supérieure à 750 HV, en particulier supérieure à 900 HV, est projetée.

12. Procédé selon l'une des revendications précédentes, où la couche de projection thermique (4) a une adhérence supérieure à 5000 psi, en particulier supérieure à 6000 psi, en particulier de plus que 7500 psi.

13. Procédé selon l'une des revendications précédentes, où la couche de projection thermique (4) est projetée en une épaisseur (D) entre 0,1 mm et 1 mm, en particulier en une épaisseur entre 0,3 mm et 0,6 mm.

14. Utilisation d'un fil de projection (5) constitué des éléments C, Cr, Mn, Mo, B, W, Nb, Si et Fe pour la production d'une couche de projection thermique (4) selon l'une des revendications 1 à 13.

15. Utilisation selon la revendication 14, où le fil de projection (5) présente la composition suivante:
C = 2 à 6% en poids
Cr = 10 à 30% en poids
Mn = 2,5 à 7,5% en poids
Mo = 5 à 15% en poids
B = 2,5 à 7,5% en poids
W = 4,5 à 13,5% en poids
Nb = 4,5 à 13,5% en poids
Si = 1 à 3% en poids
Fe = Différence à 100% en poids.

16. Utilisation selon l'une des revendications 14 ou 15, où le fil de projection (5) a la composition suivante:
C = 2 à 4% en poids
Cr = 10 à 20% en poids
Mn = 2,5 à 5% en poids
Mo = 5 à 10% en poids
B = 2,5 à 5% en poids
W = 4,5 à 9% en poids
Nb = 4,5 à 9% en poids
Si = 1 à 2% en poids
Fe = Différence à 100% en poids.

17. Utilisation selon l'une des revendications 14 à 16, où le fil de projection (5) est un fil de remplissage (5), en particulier un fil de remplissage rempli de nanoparticules et/ou de phases amorphes et/ou de phases dures.

18. Piston pour un grand moteur Diesel à deux temps avec une couche de projection thermique (4) fabriquée selon un procédé d'après l'une des revendications 1 à 13.
